# EUROPÄISCHE PATENTSCHRIFT

(11) **EP 3 417 101 B1**
(45) Veröffentlichungstag und Bekanntmachung des Hinweises auf die Patenterteilung: **27.08.2025**
(21) Anmeldenummer: 17705136.4
(22) Anmeldetag: 15.02.2017
(51) Int. Cl.: B60K 6/36, B60K 6/38, B60K 6/365, B60K 6/387, B60K 6/445, B60K 6/547, F16D 11/14, F16H 3/72, F16H 63/30, F16H 37/08, D21B 1/34

(54) **STOFFLÖSER**
PULPER
PULPEUR

(30) Priorität: 19.02.2016 DE 102016202586
(43) Veröffentlichungstag der Anmeldung: 26.12.2018
(73) Patentinhaber: Voith Patent GmbH, 89522 Heidenheim (DE)
(72) Erfinder: BART, Roman, 88045 Friedrichshafen (DE); GOTTSCHALK, Gert, 88212 Ravensburg (DE); OTT, Elmar, 88213 Ravensburg (DE)
(74) Vertreter: Voith Patent GmbH - Patentabteilung
(86) Internationale Anmeldenummer: PCT/EP2017/053378
(87) Internationale Veröffentlichungsnummer: WO 2018/114058

(56) Entgegenhaltungen:
- WO-A2-2011/045094

## Beschreibung

Die Erfindung betrifft einen Stofflöser zur Zerkleinerung und Suspendierung von Faserstoff bestehend aus einem Behälter und mindestens einem im Behälter angeordneten Rotor zum Umwälzen einer im Behälter befindlichen Faserstoffsuspension sowie mindestens einem starren Sieb, dessen mit Sieböffnungen versehene Siebfläche vom Rotor zumindest größtenteils überstrichen wird.

Stofflöser dieser Art werden hauptsächlich angewendet, um trockenes Zellstoffmaterial oder Altpapier der unterschiedlichsten Zusammensetzung in Suspension zu bringen. Sie bestehen im Wesentlichen aus einem Behälter für die Suspension und mindestens einem Rotor. Das eingetragene Material wird lose in großen Stücken, Bahnen oder gepressten Ballen mit Wasser intensiv vermischt, wobei durch den Rotor ein hydraulischer Stoffumtrieb erzeugt wird.

Verständlicherweise werden solche Vorrichtungen optimiert, wobei im Wesentlichen eine schnelle und kraftwirtschaftliche Auflösung angestrebt wird. In vielen Fällen wird der Rotor in unmittelbarer Nähe eines ebenen Siebes angeordnet, das er frei von Verstopfungen hält. Durch die Öffnungen des Siebes wird der aufgelöste Stoff von groben Verunreinigungen sortiert und als Suspension abgezogen.

Als Standardtyp für einen Stofflöser hat sich ein senkrecht stehender zylindrischer Behälter mit einem Rotor im Bodenbereich durchgesetzt. In diesen Behälter wird Wasser und der aufzulösende Stoff von oben zugegeben und mit Hilfe des Rotors eine Trombenströmung in der Suspension erzeugt, bei der also im inneren Bereich der Stoff vom Rotor nach unten gezogen und im Bodenbereich radial nach außen gedrückt wird, wodurch sich eine Umtriebsströmung ergibt.

Eine weitere typische Bauart ist der oben offene Stofflöser-Behälter mit seitlich eingesetztem Rotor. Dort wird die Suspension etwa waagerecht zum Rotor gefördert und an der den Rotor tragenden Seitenwand des Behälters umgelenkt.

Diese hydraulisch oft weniger günstige Form hat den Vorteil, unter der Papiermaschine als Ausschussauflöser Platz zu finden.

Das erwähnte Sieb dient zunächst dazu, eine Trennung vorzunehmen, bei der die bereits genügend aufgelösten Anteile des Papierstoffes durch die Öffnungen des Siebes hindurch abgezogen und noch nicht genügend Aufgelöstes zurückgehalten wird. Dadurch wird in an sich bekannter Weise der Auflöseprozess ökonomischer, insbesondere kann der Stofflöser, wenn gewünscht, kontinuierlich betrieben werden. Störstoffe, also im Wesentlichen papierfremde Bestandteile, werden zurückgehalten bzw. aussortiert.

Es ist auch bekannt, die soeben beschriebene Auflösewirkung dadurch weiter zu verstärken, dass die Siebbleche an der Einlaufseite mit Leisten versehen werden, wie es z.B. aus der DE 101 16 367 bekannt ist. Aus der WO 03/033152 A1 ist eine Siebplatte bekannt, deren Öffnungen durch Laser- oder Wasserstrahl eingebracht worden sind. Diese Öffnungen sind nicht rund, sondern mit Ecken versehen und vorzugsweise mosaikartig auf der Siebplatte verteilt. Dadurch soll die Auflösewirkung verstärkt werden.

Die bekannten Siebe für solche Stofflöser werden zumeist mit kreisrunden Bohrungen oder, wie in der EP1679403 beschrieben, mit länglichen Sieböffnungen versehen, wobei ein Kompromiss gefunden werden muss zwischen der Forderung nach optimaler Klassierung, also möglichst kleinen Sortieröffnungen, und der Forderung nach möglichst hohem Durchsatz, also möglichst großer offener Fläche.

Die Charakteristik eines solchen Siebes ergibt sich im Wesentlichen aus Größe, Form und Anzahl der sich darin befindlichen Sieböffnungen.

Neben einem großen Durchsatz wird dabei auch eine hohe Festigkeit gegen den hydraulischen Druck angestrebt.

Um dem gerecht zu werden, wird in der DE19547585 ein Sieb mit einer Stütz- und einer Sortierschicht vorgeschlagen.

Darüber hinaus wird in der WO 2011/045094 ein Sieb beschrieben, bei dem der Querschnitt der Sieböffnungen ausschließlich von Kreisabschnitten begrenzt wird. Problematisch bleiben jedoch die Sieböffnungen, insbesondere hinsichtlich Herstellung, Durchsatz und Verstopfungsgefahr.

Die Aufgabe der Erfindung ist es daher die Effizienz der Auflösung zu verbessern.

Erfindungsgemäß wurde die Aufgabe durch die Merkmale des Anspruchs 1 gelöst.

Die dem Sieb zugewandte Seite des Rotors tritt nämlich mit den Einlaufkanten der Sieböffnungen in Wechselwirkung. Zwar wird immer ein gewisser Abstand zwischen Rotor und Sieb eingehalten, doch genügen die dabei auftretenden Scherkräfte, die Papierstoffteilchen weiter zu zerlegen. Größere Stücke können auch den Abstand zwischen Sieb und Rotor überbrücken, so dass eine direkte Schnittwirkung eintritt. Hinsichtlich des Zusammenspiels mit dem Rotor kommt der in Rotationsrichtung liegenden Seite der Sieböffnung eine besondere Bedeutung zu. Durch die konkave Krümmung dieser Seite wird die Entstippung des Faserstoffs wesentlich verbessert und der Durchsatz erhöht.

Bewegt sich die in Rotationsrichtung weisende Vorderseite des Rotors auf den konkav gekrümmten Mündungsabschnitt der Sieböffnung zu, so teilt sich die Faserstoffströmung zu beiden Enden der konkaven Krümmung hin auf, was die Behandlung des Faserstoffs intensiviert.

Um die konkave Krümmung möglichst groß gestalten zu können, sollten die Sieböffnungen auf der in Rotationsrichtung des Rotors liegenden Seite nur jeweils einen konkav gekrümmten Kreisabschnitt besitzen.

Zur Behandlung von Faserstoffsuspensionen hat es sich als optimal erwiesen, wenn der Radius des konkav gekrümmten Kreisabschnitts zwischen 6 und 20 mm liegt. Damit die Vorderseite des Rotors möglichst umfassend mit dem konkav gekrümmten Kreisabschnitt zusammenwirken kann, sollte eine durch die beiden Enden des konkav gekrümmten Kreisabschnitts verlaufende Gerade mit der in Rotationsrichtung weisenden Vorderseite des Rotors jeweils einen Winkel zwischen 0° und ± 20° bilden.

Der Querschnitt der Sieböffnungen wird ausschließlich von Kreisabschnitten begrenzt, wobei die Radien einen tangentialen Übergang aufweisen sollten und sich hinsichtlich Krümmungsradius und/oder Krümmungsrichtung unterscheiden.

Die runde Ausführung der Sieböffnungen wirkt sich positiv auf eine Herstellung mittels Wasserstrahl- oder Laserschneiden aus, da keine Geschwindigkeitsänderung wie ansonsten beim Schneiden von Ecken erforderlich ist.

Außerdem verbessert sich durch die ausschließlich runden Kanten der Sieböffnungen die Wirkung des Rotors beim Überstreichen derselben erheblich.

Hinzu kommt neben einer verminderten Verstopfungsgefahr auch die Möglichkeit einer Optimierung hinsichtlich offener Fläche und Festigkeit des Siebes.

Dabei sollten die Kreisabschnitte unterschiedlich lang sein und/oder unterschiedliche Radien aufweisen, wobei sich vorzugsweise lange und kurze Kreisabschnitte bzw. große und kleine Radien abwechseln und insbesondere lange, vorzugsweise gleich große Kreisabschnitte große Radien und kurze, vorzugsweise gleich große Kreisabschnitte kleine Radien haben.

Damit der konkav gekrümmte Kreisabschnitt auf der in Rotationsrichtung des Rotors liegenden Seite der Sieböffnungen eine möglichst große Wirkung entfalten kann, sollte dieser auch als langer Kreisabschnitt ausgebildet sein.

Untersuchungen hierzu haben ergeben, dass ein optimales Verhältnis zwischen dem größten und dem kleinsten Radius der Kreisabschnitte zwischen 2 und 5 zu finden ist.

Eine besonders vorteilhafte Ausführung hinsichtlich eines maximalen Durchsatzes ergibt sich, wenn der Querschnitt der Sieböffnungen jeweils von mehreren, bezüglich der Mitte des Querschnitts der Sieböffnung konvex gekrümmten und nur einem konkav gekrümmten Kreisabschnitt begrenzt wird.

Da der Querschnitt der Sieböffnungen von nur 4 Kreisabschnitten begrenzt wird, erlaubt dies eine besonders starke Ausprägung ihrer Krümmung und damit auch ihrer Wirkung.

Zur Ausbildung eines besonders wirksamen, konkav gekrümmten Kreisabschnittes sollte dabei der Radius des vorzugsweise einzigen, konkav gekrümmten Kreisabschnitts der Sieböffnungen kleiner als der Radius des jeweils gegenüberliegenden konvex gekrümmten Kreisabschnitts sein.

Bei entsprechend symmetrischer Gestaltung des Rotors erlaubt diese Querschnittsform der Sieböffnungen beide Rotationsrichtungen, wobei die jeweils in Rotationsrichtung weisende Vorderseite des Rotors mit dem, auf der in Rotationsrichtung des Rotors liegenden Seite der Sieböffnungen vorhandenen, konkaven Kreisabschnitt zusammenwirkt.

Entsprechend den Anforderungen an den Stofflöser bzw. dessen Konstruktion sowie der Qualität und Zusammensetzung der Faserstoffsuspension kann es von Vorteil sein, wenn alle Sieböffnungen der Siebfläche gleich ausgebildet sind.

Zur Steigerung des Durchsatzes bei weitestgehend gleicher Siebfeinheit sollten die Sieböffnungen einen länglichen Querschnitt aufweisen.

Außerdem kann einer Verstopfung entgegengewirkt werden, wenn sich der Querschnitt einer Sieböffnung in Durchströmungsrichtung der Faserstoffsuspension vorzugsweise stetig vergrößert.

Als Stofflöser werden hier auch Nachauflöse-Maschinen, beispielsweise Fiberizer verstanden.

Nachfolgend soll die Erfindung an mehreren Ausführungsbeispielen näher erläutert werden. **In** der beigefügten Zeichnung zeigt:
Figur 1: einen Querschnitt durch einen stehenden Stofflöser;
Figuren 2-5: verschiedene Querschnitte von Sieböffnungen 6;
Figur 6: eine Draufsicht auf ein Sieb 3 mit Rotor 4 und
Figur 7: einen Teilquerschnitt durch ein Sieb 3.

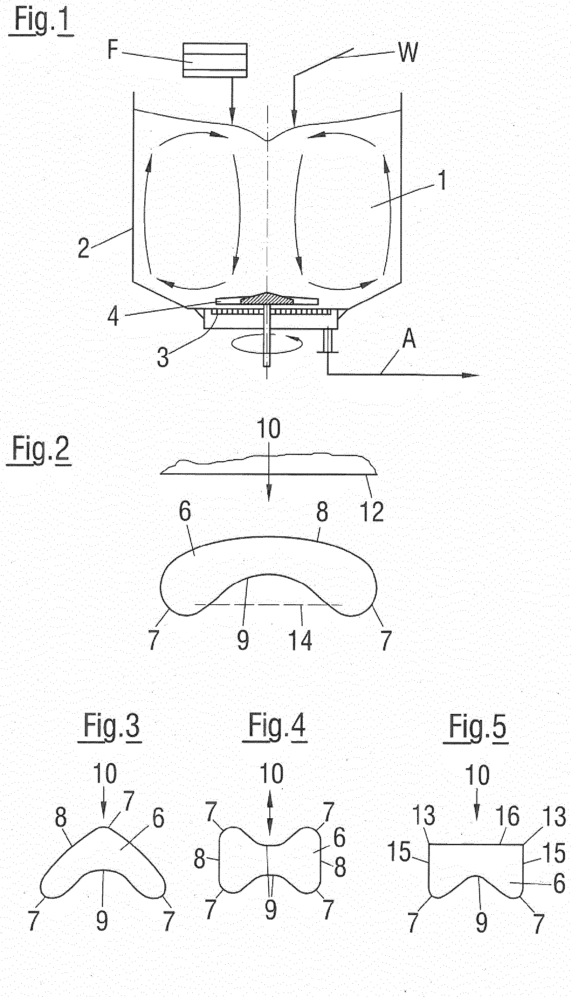

Die häufigste Form eines Stofflösers, bei dem die Erfindung angewendet werden kann, ist der stehende, zylindrische und oben offene Stofflöser gemäß Figur 1, bei dem sich Sieb 3 und Rotor 4 im Bodenbereich befinden. Beim Betrieb werden Papierstoff F und Wasser W in den Behälter 2 eingetragen. Die fertige pumpfähige Faserstoffsuspension 1 wird durch die Sieböffnungen 6 des Siebes 3 hindurch als Gutstoff A abgezogen. Solche Stofflöser sind seit langem bekannt.

Dabei wird die Siebfläche des starren und kreisrunden Siebes 3 größtenteils vom Rotor 4 bzw. dessen Rotorflügeln überstrichen, wobei der Rotor 4 in Durchströmrichtung der Faserstoffsuspension 1 vor dem Sieb 3 rotiert.

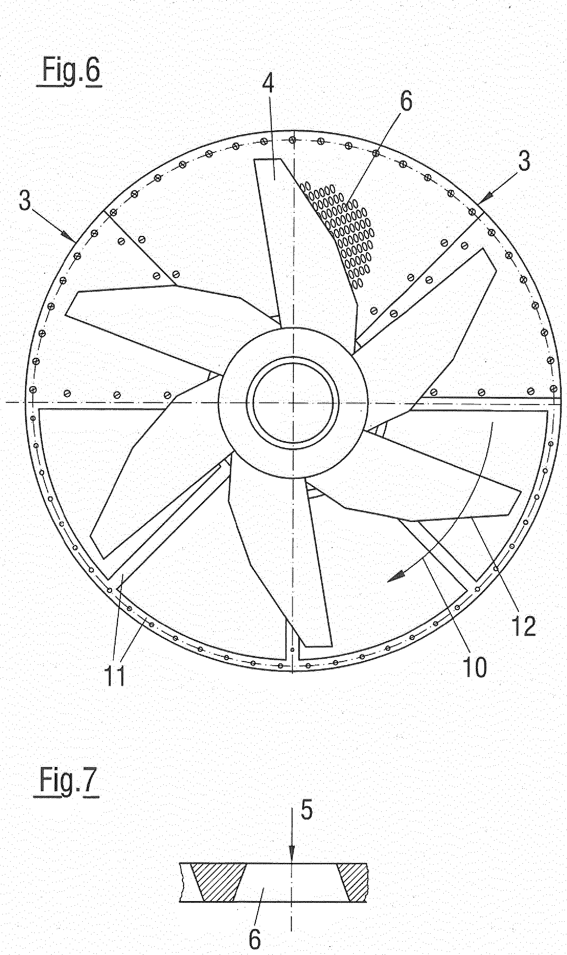

Hierzu zeigt Figur 6 einen Rotor 4, der konzentrisch mit einem ringförmigen ebenen Sieb 3 im ansonsten nicht dargestellten Stofflöser angeordnet ist. Der Rotor 4 ist mit Flügeln versehen und so dimensioniert, dass er bei Rotation die Siebfläche des Siebes 3 vollständig oder zumindest größtenteils überstreicht.

Bei größeren Sieben 3 ist es üblich, diese zunächst als Ringsegmente herzustellen, die dann im Stofflöser zu einem gesamten Sieb 3 zusammengesetzt werden. Bei dem hier gezeigten Beispiel besteht das ganze Sieb 3 aus insgesamt acht Segmenten, von denen vier gezeichnet sind.

Die Siebsegmente können an einem darunter liegenden Traggestell 11 befestigt werden.

Wie in Figur 7 dargestellt, sollte sich der Querschnitt der Sieböffnung 6 in Durchströmrichtung 5 kontinuierlich vergrößern, was einem Verstopfen der Sieböffnungen 6 entgegenwirkt.

Dabei bereitet die Herstellung der Sieböffnungen 6 mit der erfinderischen Querschnittsform wie auch eine Querschnittsveränderung beim Laserschneiden keinerlei Probleme. Im Gegenteil so kann das Schneidgerät bei fehlenden Ecken gleichmäßiger entlang der zu schneidenden Kontur bewegt werden.

Erfindungsgemäß besitzt der Querschnitt der Sieböffnungen 6 auf der in Rotationsrichtung 10 des Rotors 4 liegenden Seite der Sieböffnungen 6 einen Kreisabschnitt 9, der bezogen auf die Mitte des Querschnitts der Sieböffnung 6 konkav gekrümmt verläuft.

Dieser entgegen der Rotationsrichtung 10 des Rotors 4 in die Sieböffnung 6 hineinragende, bezogen auf die Mitte konkave Kreisabschnitt 9 führt im Zusammenwirken mit der, in Rotationsrichtung 10 weisenden Vorderseite des Rotors 4 zu einer intensiven Entstippung des Papierstoffs F und somit zu einer effizienten Auflösung.

Unter Berücksichtigung der dabei üblichen Dimensionen für die Sieböffnung 6 liegt der Radius des konkav gekrümmten Kreisabschnitts 9 im Interesse einer möglichst umfassenden Wirkung zwischen 6 und 20 mm.

Damit die Vorderseite 12 des Rotors 4 frontal auf den konkav gekrümmten Kreisabschnitt 9 trifft, bildet eine durch die beiden Enden des konkav gekrümmten Kreisabschnitts 9 verlaufende Gerade 14 mit der in Rotationsrichtung 10 weisenden Vorderseite 12 des Rotors 4 im Bereich der betreffenden Sieböffnung 6 einen Winkel zwischen 0 und ± 20°. Dies führt auch dazu, dass sich die Faserstoffströmung beim Auftreffen des Rotors 4 zu den beiden Enden des konkav gekrümmten Kreisabschnitts 9 aufteilt, was die Entstippung unterstützt.

Falls, wie bei Figur 6 zu sehen, die in Rotationsrichtung 10 weisende Vorderseite 12 des Rotors 4 nicht durchgehend gerade verläuft, so müssen die Sieböffnungen 6 entsprechend ausgerichtet werden, damit die konkav gekrümmten Kreisabschnitte 9 ihre Wirkung entfalten können.

Die Figuren 2 bis 5 zeigen hierzu beispielhaft verschiedene Querschnittsformen der Sieböffnungen 6.

Gemeinsam ist den Sieböffnungen 6 gemäß den Figuren 2 bis 4, dass deren Querschnitt ausschließlich von Kreisabschnitten 7,8,9 begrenzt wird.

Dabei variieren Länge und Radien der Kreisabschnitte 7,8,9 derart, dass sich lange Kreisabschnitte 8,9 mit großem Radius und kurze Kreisabschnitte 7 mit kleinem Radius abwechseln, wobei der konkav gekrümmte Kreisabschnitt 9 immer auch lang ausgeführt ist.

Das Verhältnis zwischen dem größten 8,9 und dem kleinsten 7 Radius der Kreisabschnitte liegt hier im Bereich von 3 bis 4.

Bei den in Figur 2 und 3 dargestellten Sieböffnungen 6 wird der Querschnitt der Sieböffnungen 6 jeweils von mehreren, bezüglich der Mitte des Querschnitts der Sieböffnung 6 konvex 7,8 gekrümmten und nur einem konkav 9 gekrümmten Kreisabschnitt begrenzt.

Der Querschnitt der Sieböffnungen 6 entsprechend den Figuren 2 und angedeutet auch Figur 6 wird nur von vier Kreisabschnitten 7,8,9 begrenzt.

Dabei ist der Radius des konkav gekrümmten Kreisabschnitts 9 der Sieböffnungen 6 kleiner als der Radius des gegenüberliegenden, konvex gekrümmten Kreisabschnitts 8, was sich positiv auf die Wirkung des konkav gekrümmten Kreisabschnitts 9 auswirkt.

Im Unterschied hierzu setzt sich bei Figur 3 der Querschnitt der Sieböffnung 6 aus drei kurzen, konvex gekrümmten 7, zwei langen konvex gekrümmten 8 und dem konkav gekrümmten 9 Kreisabschnitt zusammen. Dies kann zur Änderung der Klassierung vorteilhaft sein. Diese Ausbildung wird nicht beansprucht.

Die Ausführung gemäß Figur 4 zeigt einen Querschnitt einer Sieböffnungen 6, der von acht Kreisabschnitten 7,8,9 begrenzt wird. Dabei ist ein auf der in sowie ein auf der entgegen der Rotationsrichtung 10 liegenden Seite der Sieböffnung 6 angeordneter, langer Kreisabschnitt 9 bezüglich der Mitte des Querschnitts der Sieböffnung 6 konkav gekrümmt. Die drei jeweils zwischen diesen konkaven Kreisabschnitten 9 vorhandenen Kreisabschnitte 7,8 sind bezüglich der Mitte des Querschnitts konvex gekrümmt.

Auf diese Weise ist das Sieb 3 für beide Drehrichtungen des Rotors 4 geeignet. Auch diese Ausbildung wird nicht beansprucht.

Abweichend von den bisher beschriebenen Ausführungen besitzt der Querschnitt der Sieböffnung 6 in Figur 5 auf der entgegen der Rotationsrichtung 10 des Rotors 4 liegenden Seite der Sieböffnungen 6 zwei Ecken 13.

Zu diesen Ecken 13 führen jeweils beidseitig gerade Abschnitte 15,16, von denen einer 16 die beiden Ecken 13 verbindet und die anderen beiden 15 jeweils über einen kurzen, konvexen Kreisabschnitt 7 mit dem langen, konkav gekrümmten Kreisabschnitt 9 in Verbindung stehen.

Damit lassen sich unter Ausnutzung der vorteilhaften Wirkung des konkav gekrümmten Kreisabschnittes 9 große Sieböffnungen 6 realisieren. Auch diese Ausbildung wird nicht beansprucht.

## Patentansprüche

1. Stofflöser zur Zerkleinerung und Suspendierung von Faserstoff (F) bestehend aus einem Behälter (2) und mindestens einem im Behälter (2) angeordneten Rotor (4) zum Umwälzen einer im Behälter (2) befindlichen Faserstoffsuspension (1) sowie mindestens einem starren Sieb (3), dessen mit Sieböffnungen (6) versehene Siebfläche vom Rotor (4) zumindest größtenteils überstrichen wird, wobei der Querschnitt der Sieböffnungen (6) auf der in Rotationsrichtung (10) des Rotors (4) liegenden Seite der Sieböffnungen (6) wenigstens einen Kreisabschnitt (9) aufweist, der bezogen auf die Mitte des Querschnitts der Sieböffnung (6) konkav gekrümmt verläuft und so entgegen der Rotationsrichtung (10) des Rotors (4) in die Sieböffnung (6) hineinragt, wobei eine durch die beiden Enden des konkav gekrümmten Kreisabschnitts (9) verlaufende Gerade (14) mit der in Rotationsrichtung (10) weisenden Vorderseite (12) des Rotors (4) im Bereich der betreffenden Sieböffnung (6) einen Winkel zwischen 0° und ± 20° bildet und/oder der Querschnitt der Sieböffnungen (6) ausschließlich von 4 Kreisabschnitten (7,8,9) begrenzt wird, wobei nur ein Kreisabschnitt (9) konkav gekrümmt ist und der Radius des konkav gekrümmten Kreisabschnitts (9) der Sieböffnungen (6) kleiner als der Radius des gegenüberliegenden konvex gekrümmten Kreisabschnitts (8) ist.

2. Stofflöser nach Anspruch 1, **wobei** die Sieböffnungen (6) auf der in Rotationsrichtung (5) des Rotors (4) liegenden Seite nur jeweils einen konkav gekrümmten Kreisabschnitt (9) besitzen.

3. Stofflöser nach einem der vorhergehenden Ansprüche, **wobei** der Radius des konkav gekrümmten Kreisabschnitts (9) zwischen 6 und 20 mm liegt.

4. Stofflöser nach einem der vorhergehenden Ansprüche, **wobei** der Querschnitt der Sieböffnungen (6) auf der entgegen der Rotationsrichtung (10) des Rotors (4) liegenden Seite der Sieböffnungen (6) eine oder mehrere Ecken (13) hat.

5. Stofflöser nach Anspruch 1, **wobei** die Kreisabschnitte (7,8,9) unterschiedlich lang sind.

6. Stofflöser nach Anspruch 5, **wobei** sich kurze (7) und lange (8,9) Kreisabschnitte abwechseln und vorzugsweise ein langer Kreisabschnitt (9) konkav gekrümmt ist.

7. Stofflöser nach einem der Ansprüche 5 bis 6, **wobei** die Kreisabschnitte (7,8,9) unterschiedliche Radien haben.

8. Stofflöser nach Anspruch 7, **wobei** sich große (8, 9) und kleine (7) Radien abwechseln.

9. Stofflöser nach Anspruch 7 oder 8, **wobei** lange Kreisabschnitte große Radien (8, 9) und kurze Kreisabschnitte kleine Radien (7) haben.

10. Stofflöser nach einem der Ansprüche 7 bis 9, **wobei** das Verhältnis zwischen dem größten (8,9) und dem kleinsten (7) Radius der Kreisabschnitte zwischen 2 und 5 liegt.

11. Stofflöser nach einem der Ansprüche 5 bis 10, **wobei** der Querschnitt der Sieböffnungen (6) jeweils von mehreren, bezüglich der Mitte des Querschnitts der Sieböffnung (6) konvex (7,8) gekrümmten und nur einem konkav (9) gekrümmten Kreisabschnitt begrenzt wird.

## Claims

1. Pulper for comminuting and suspending fibrous material (F) consisting of a container (2) and at least one rotor (4) arranged in the container (2) for circulating a fibrous suspension (1) located in the container (2) and at least one rigid screen (3), the screen surface of which provided with screen openings (6) is swept over at least for the most part by the rotor (4), wherein the cross-section of the screen openings (6) on the side of the screen openings (6) lying in the rotational direction (10) of the rotor (4) has at least one circle portion (9) which runs concavely curved with respect to the centre of the cross-section of the screen opening (6) and thus projects into the screen opening (6) against the rotational direction (10) of the rotor (4), wherein a straight line (14) running through the two ends of the concavely curved circle portion (9) forms an angle between 0° and ± 20° with the front side (12) of the rotor (4) pointing in the rotational direction (10) in the region of the relevant screen opening (6) and/or the cross-section of the screen openings (6) is bounded exclusively by 4 circle portions (7, 8, 9), wherein only one circle portion (9) is concavely curved and the radius of the concavely curved circle portion (9) of the screen openings (6) is smaller than the radius of the opposite, convexly curved circle portion (8).

2. Pulper according to Claim 1, **wherein** the screen openings (6) have only one concavely curved circle portion (9) on the side lying in the rotational direction (5) of the rotor (4).

3. Pulper according to one of the preceding claims, **wherein** the radius of the concavely curved circle portion (9) is between 6 and 20 mm.

4. Pulper according to one of the preceding claims, **wherein** the cross-section of the screen openings (6) has one or more corners (13) on the side of the screen openings (6) lying opposite the rotational direction (10) of the rotor (4).

5. Pulper according to Claim 1, **wherein** the circle portions (7, 8, 9) are of different lengths.

6. Pulper according to Claim 5, **wherein** short (7) and long (8, 9) circle portions alternate and preferably a long circle portion (9) is concavely curved.

7. Pulper according to one of Claims 5 to 6, **wherein** the circle portions (7, 8, 9) have different radii.

8. Pulper according to Claim 7, **wherein** large (8, 9) and small (7) radii alternate.

9. Pulper according to Claim 7 or 8, **wherein** long circle portions have large radii (8, 9) and short circle portions have small radii (7).

10. Pulper according to one of Claims 7 to 9, **wherein** the ratio between the largest (8, 9) and the smallest (7) radius of the circle portions is between 2 and 5.

11. Pulper according to one of Claims 5 to 10, **wherein** the cross-section of the screen openings (6) is defined in each case by a plurality of circle portions which are curved convexly (7, 8) with respect to the centre of the cross-section of the screen opening (6), with only one curved concavely (9).

## Revendications

1. Pulpeur permettant de désintégrer et mettre en suspension de la matière fibreuse (F), constitué d'un récipient (2) et d'au moins un rotor (4) disposé dans le récipient (2) pour faire circuler une suspension de matière fibreuse (1) se trouvant dans le récipient (2) ainsi que d'au moins un tamis (3) rigide dont la surface de tamis pourvue d'ouvertures de tamis (6) est balayée au moins en grande partie par le rotor (4), dans lequel la section transversale des ouvertures de tamis (6) présente, sur le côté des ouvertures de tamis (6) situé dans le sens de rotation (10) du rotor (4), au moins un segment de cercle (9) qui s'étend de manière incurvée de façon concave par rapport au centre de la section transversale de l'ouverture de tamis (6) et pénètre ainsi dans l'ouverture de tamis (6) en sens inverse du sens de rotation (10) du rotor (4), dans lequel une ligne droite (14) s'étendant à travers les deux extrémités du segment de cercle (9) incurvé de façon concave forme avec le côté avant (12), tourné dans le sens de rotation (10), du rotor (4), dans la région de l'ouverture de tamis (6) concernée, un angle compris entre 0 ° et ± 20 ° et/ou la section transversale des ouvertures de tamis (6) est délimitée exclusivement par 4 segments de cercle (7, 8, 9), dans lequel seulement un segment de cercle (9) est incurvé de façon concave et le rayon du segment de cercle (9), incurvé de façon concave, des ouvertures de tamis (6) est inférieur au rayon du segment de cercle (8) incurvé de façon convexe opposé.

2. Pulpeur selon la revendication 1, dans lequel les ouvertures de tamis (6) ne possèdent respectivement qu'un segment de cercle (9) incurvé de façon concave sur le côté situé dans le sens de rotation (5) du rotor (4).

3. Pulpeur selon l'une des revendications précédentes, dans lequel le rayon du segment de cercle (9) incurvé de façon concave est compris entre 6 et 20 mm.

4. Pulpeur selon l'une des revendications précédentes, dans lequel la section transversale des ouvertures de tamis (6) présente un ou plusieurs coins (13) sur le côté des ouvertures de tamis (6) situé en sens inverse du sens de rotation (10) du rotor (4).

5. Pulpeur selon la revendication 1, dans lequel les segments de cercle (7, 8, 9) sont de longueurs différentes.

6. Pulpeur selon la revendication 5, dans lequel des segments de cercle courts (7) et longs (8, 9) alternent et de préférence un segment de cercle (9) long est incurvé de façon concave.

7. Pulpeur selon l'une des revendications 5 et 6, dans lequel les segments de cercle (7, 8, 9) présentent des rayons différents.

8. Pulpeur selon la revendication 7, dans lequel des rayons grands (8, 9) et petits (7) alternent.

9. Pulpeur selon la revendication 7 ou 8, dans lequel des segments de cercle longs présentent des grands rayons (8, 9) et des segments de cercle courts présentent des petits rayons (7).

10. Pulpeur selon l'une des revendications 7 à 9, dans lequel le rapport entre le rayon le plus grand (8, 9) et le rayon le plus petit (7) des segments de cercle est compris entre 2 et 5.

11. Pulpeur selon l'une des revendications 5 à 10, dans lequel la section transversale des ouvertures de tamis (6) est délimitée respectivement par plusieurs segments de cercle incurvés de façon convexe (7, 8) par rapport au centre de la section transversale de l'ouverture de tamis (6) et seulement un segment de cercle incurvé de façon concave (9).
